# EUROPEAN PATENT SPECIFICATION

(11) **EP 3 565 717 B1**
(45) Date of publication and mention of the grant of the patent: **26.10.2022**
(21) Application number: 18736097.9
(22) Date of filing: 03.01.2018
(51) Int. Cl.: B32B 27/06, B32B 27/08, B32B 27/20

(54) **VEHICLE INTERIOR COMPONENT**
FAHRZEUGINNENKOMPONENTE
COMPOSANT D'INTÉRIEUR DE VÉHICULE

(30) Priority: 06.01.2017 US 201762443452 P
(43) Date of publication of application: 13.11.2019
(73) Proprietor: Shanghai Yanfeng Jinqiao Automotive Trim Systems Co. Ltd, Novi, MI 48377 (US)
(72) Inventor: HANSEN, Scott Allen, Holland, MI 49424 (US); PRICE, James Bradley, Holland, MI 49424 (US); STANLEY, Karl Robert, Holland, MI 49424 (US)
(74) Representative: Trinks, Ole
(86) International application number: PCT/US2018/012225
(87) International publication number: WO 2018/129071

(56) References cited:
- WO-A1-2016/120287
- US-A1- 2005 276 874
- US-A1- 2007 194 487
- US-A1- 2008 093 013
- US-A1- 2009 174 121
- US-A1- 2010 133 866
- US-A1- 2011 183 120
- US-A1- 2014 284 953
- US-A1- 2016 075 290

## Description

### FIELD

The present invention relates to a vehicle interior component. The present invention also relates to a method of manufacturing such a vehicle interior component.

### CROSS REFERENCE TO RELATED APPLICATIONS

The present application claims priority from U.S. Provisional Patent Application No. 62/443,452 filed January 6, 2017, entitled "Vehicle Interior Component".

### BACKGROUND

Components in vehicle interiors are often given a cover intended to protect the component from damage. Such components (and cover) are typically formed from materials that are relatively cost-efficient for production methods (e.g. molded plastics) but may not be fully desired by interior designers wishing to present contoured surfaces (e.g. in forms that are aesthetically integrated) of materials typically considered more pleasing to vehicle occupants.

It would be advantageous to provide an improved component assembly for a vehicle interior that can provide an improved aesthetic opportunity/visual effect. It would also be advantageous to provide improved arrangement for providing a display assembly in a component in a vehicle interior. It would further be advantageous to provide an improved component assembly with contoured surface and improved visual appearance component decorated with materials such as wood, metal, stone, etc. (e.g. decorative, authentic material) but that does not add undesired mass to the vehicle.

The applicant on US 2014/0284953 A1 states that their invention relates to a fitting part for the interior of a motor vehicle that includes a backing manufactured from a material having at least one natural substance, a decorative layer made of a material having natural fibers that cover at least part of a visible side of the backing, and a transparent or translucent outer layer provided at least in part on the backing and/or the decorative layer.

The applicant on US 2008/093013 A1 states that their invention relates to a method for the production of a component with a decorative and a face layer. A decorative layer and a face layer are joined to create a composite. The composite is then bonded to a substrate in order to produce a finished component.

The applicant on US 2007/194487 A1 states that their invention relates to a method of manufacturing decorative plastic composites having a decorative layer, a backing layer and a clear outer layer which provides exceptional "depth of image". Decorative or protective appliqués' having a wide range of decorative patterns may be formed by injection molding a backing layer behind and a clear outer layer on the top surface of a thin foil, film, fabric or veneer. A method is also disclosed for coating the exposed surface of the decorative layer between injection of the backing and outer layer to impart a desired visual effect or repair the surface.

The applicant on US 2016/075290 A1 states that their invention relates to a vehicle trim component that is prepared by a process that includes providing a cover on a plate, providing a first material layer on the cover, and providing a second material layer on the first material layer to form the vehicle trim component. The first material layer bonds to the cover as it solidifies. The second material layer bonds to the first material layer as it solidifies.

The applicant on US 2011/183120 A1 states that their invention relates to a coated thermoplastic film that can be subjected to printing to obtain a decorative film, preformed, and then inserted into a mold that has the configuration of the preformed decorative film. A base polymeric structure comprising a polymer such as a polycarbonate or blend thereof can be injection molded to the exposed surface of the preformed decorative film. The molded structure has various applications such as cell phones or other electronic devices, automotive vehicles, appliances, display panels, lenses, etc. A process for making the molded article is also described. The coating for the coated thermoplastic film can be made from a UV-curable composition and can provide superior embossing and thermoformability, hardness, and adhesion, while providing enhanced chemical, scratch and abrasion resistance.

The applicant on WO 2016/120287 A1 states that their invention relates to a component for a vehicle interior. The component comprises a base comprising a surface and a depression in the surface, and a first decorative layer coupled to the base and comprising a front surface and a rear surface. The first decorative layer is at least partially contained in the depression of the surface of the base.

The applicant on US 2009/174121 A1 states that their invention relates to a method of manufacturing decorative plastic composites having a decorative layer, a backing layer and a clear outer layer which provides exceptional "depth of image".

The applicant on US 2010/133866 A1 states that their invention relates to an interior trim component that includes multiple substantially parallel ribs each configured to engage a track to facilitate movement of the interior trim component along the track. The interior trim component also includes a substrate having a first surface and a second surface. The first surface is coupled to the ribs, and the second surface is opposite the first surface and is substantially smooth.

The applicant on US 2005/276874 A1 states that their invention relates to a method of manufacturing a decorative component for vehicle interiors, comprising the steps of pre-forming a sheet of formable veneer material under pressure and heath, positioning the pre-formed sheet in a mold half of an injection mold comprising a cavity; holding the sheet in position on the mold half, closing said mold and injecting into the cavity one or more thermoplastic materials on the back of the veneer sheet to provide a support layer.

### SUMMARY

The present invention relates to a component for a vehicle interior with a surface intended to be visible to an occupant when the component is installed in the vehicle interior. The component comprises a base, a decorative layer and a cover. The decorative layer is coupled to the base. The cover is coupled to the decorative layer. The cover comprises an outer layer. The decorative layer may comprise a laminate. The base may comprise a nonplanar surface. The cover may comprise an inner layer. The inner layer of the cover and the outer layer of the cover may be nonplanar. The inner layer of the cover may be configured to align with the nonplanar surface of the base. The decorative layer comprises a natural material. The decorative layer may be laminated to the base. The component may comprise an adhesive. The adhesive may be configured to couple the decorative layer to the cover. The adhesive may be configured to transmit light passing from the cover to the decorative layer. The cover comprises glass. The cover may comprise plastic. The outer layer of the cover may comprise at least (a) glass (b) plastic. The inner layer of the cover comprises at least a portion configured to prevent visibility of the decorative layer. The inner layer of the cover may comprise at least one of (a) ink (b) paint (c) a foil (d) a film configured to prevent illumination to pass from a display to the outer layer of the cover. The inner layer of the cover may comprise at least a portion configured to allow illumination to pass from a display to the outer layer of the cover. The inner layer comprises at least one of (a) an electrical circuit (b) a sensor (c) a capacitive switch (d) a capacitive switch sensor. The cover may comprise an opening. The opening may be configured to at least one of (a) expose the decorative layer (b) uncover the decorative layer. The surface intended to be visible to an occupant may comprise a first portion comprising the cover and a second portion comprising the decorative layer. The decorative layer may be configured to provide a visual effect. The cover may be configured to provide a visual effect. The visual effect of the decorative layer and the visual effect of the cover may be configured to provide a composite visual effect.

The present disclosure also relates to a component for a vehicle interior (not part of the claimed invention) providing a composite visual effect. The component may comprise a base, a decorative layer and a cover. The decorative layer may provide a visual effect. The decorative layer may be coupled to the base. The cover may provide a visual effect. The cover may be coupled over the decorative layer. The composite visual effect may be provided by the visual effect of the decorative layer and the visual effect of the cover. The base may comprise a nonplanar surface. The cover may comprise an inner surface and an outer surface. The inner surface of the cover and the outer surface of the cover may be nonplanar. The inner surface of the cover may be configured to align with the nonplanar surface of the base. The outer surface of the cover may comprise at least one of (a) glass, (b) plastic. The cover may comprise a nonplanar form. The decorative layer may be laminated to the base. The decorative layer may comprise a sheet. The component may comprise an adhesive configured to couple the decorative layer to the cover. The adhesive may be configured to transmit light from the cover to the decorative layer. The visual effect of the cover may comprise at least one of: (a) transparent; (b) translucent; (c) opaque; (d) paint; (e) coating; (f) gradient; (g) transition; (h) shading; (i) material of construction; (j) plastic; (k) molded plastic; (l) contour; (m) surface effect; (n) contour shape; (o) nonplanar shape; (p) speckling; (q) partially transparent; (r) partially translucent; (s) partially opaque. The visual effect of the decorative layer may comprise at least one of: (a) composite wood; (b) metal; (c) texture; (d) wood; (e) wood grain; (f) laminate surface; (g) natural material; (h) authentic material; (i) foil; (j) contour; (k) curved edge; (l) fiber; (m) fabric; (n) stone; (o) mineral. The visual effect of the cover may comprise a transition between two visual effects. The cover may comprise a film. The film may comprise at least a portion configured to absorb light from a display.

The present invention further relates to a method of manufacturing a vehicle trim component comprising the steps of providing a base, joining a decorative layer to the base to create a decorative base and joining a cover to the decorative layer. At least a portion of the cover is configured to allow illumination to pass from the cover to the decorative base. The method may comprise the step of applying at least one of (a) ink (b) paint (c) a foil (d) a film to an inner surface of the cover to create a cover assembly comprising a transparent portion and a partially opaque portion. The cover comprises an inner layer. At least a portion of the inner layer of the cover may be configured to transmit light passing from a display to the outer layer of the cover. The method may comprise the step of applying at least one of (a) ink (b) paint (c) a foil (d) a film to an outer layer of the cover to create the inner layer. At least a portion of the inner layer may be configured to prevent transmission of light passing from the outer layer to the decorative base. The method may comprise the step of applying coating to at least a portion of the cover to create a visual effect. The inner layer of the cover comprises at least one of (a) an electrical circuit (b) a sensor (c) a capacitive switch (d) a capacitive switch sensor. Joining the cover to the decorative layer may comprise applying an adhesive to at least one of (a) the cover (b) the decorative layer. The adhesive may be configured to allow illumination to pass from the cover to the decorative base. The method may comprise the step of creating an opening in the cover. The opening may be configured to at least one of (a) expose the decorative base (b) uncover the decorative base.

### FIGURES

FIGURE 1A is a schematic perspective view of a vehicle according to an exemplary embodiment.
FIGURE 1B is a schematic perspective cut-away view of a vehicle showing an interior according to an exemplary embodiment.
FIGURES 2A and 2B are schematic perspective views of a vehicle interior with components according to an exemplary embodiment.
FIGURE 3A is a schematic exploded side view of an assembly of a component according to an exemplary embodiment.
FIGURE 3B is a schematic side view of the component according to an exemplary embodiment.
FIGURE 4A is a schematic exploded side views of an assembly of a component according to an exemplary embodiment.
FIGURE 4B is a schematic side view of the component according to an exemplary embodiment.
FIGURES 5A to 5D are schematic side views of an assembly of a component according to an exemplary embodiment
FIGURES 6A to 6D are schematic side views of an assembly of a component according to an exemplary embodiment
FIGURE 7A is a schematic exploded side view of an assembly of a component according to an exemplary embodiment.
FIGURE 7B is a schematic side view of the component according to an exemplary embodiment.
FIGURES 8A to 8D are schematic side views of an assembly of a component according to an exemplary embodiment.
FIGURE 8E is a schematic side view of the component according to an exemplary embodiment.
FIGURE 8F is a schematic side view of the component according to an exemplary embodiment.
FIGURE 9A is a schematic perspective view of a component according to an exemplary embodiment.
FIGURE 9B is a schematic perspective view of a cover of a component according to an exemplary embodiment.
FIGURE 9C is a schematic perspective view of a decorative layer of a component according to an exemplary embodiment.
FIGURE 10A is a schematic exploded side view of an assembly of a component according to an exemplary embodiment.
FIGURE 10B is a schematic side view of the component according to an exemplary embodiment.
FIGURE 11A is a schematic exploded side view of an assembly of a component according to an exemplary embodiment.
FIGURE 11B is a schematic side view of the component according to an exemplary embodiment.
FIGURES 12A to 12C are schematic side views of an assembly of a component according to an exemplary embodiment.
FIGURE 12D is a schematic side view of the component according to an exemplary embodiment.
FIGURES 13A to 13D are schematic side views of an assembly of a component according to an exemplary embodiment.
FIGURE 14 is a schematic side view of treatment/assembly of a component according to an exemplary embodiment.
FIGURE 15A is a schematic exploded side view of an assembly of a component according to an exemplary embodiment.
FIGURE 15B is a schematic side view of the component according to an exemplary embodiment.
FIGURES 16 to 18 are schematic flow diagrams of methods to produce a component assembly according to an exemplary embodiment.

### DESCRIPTION

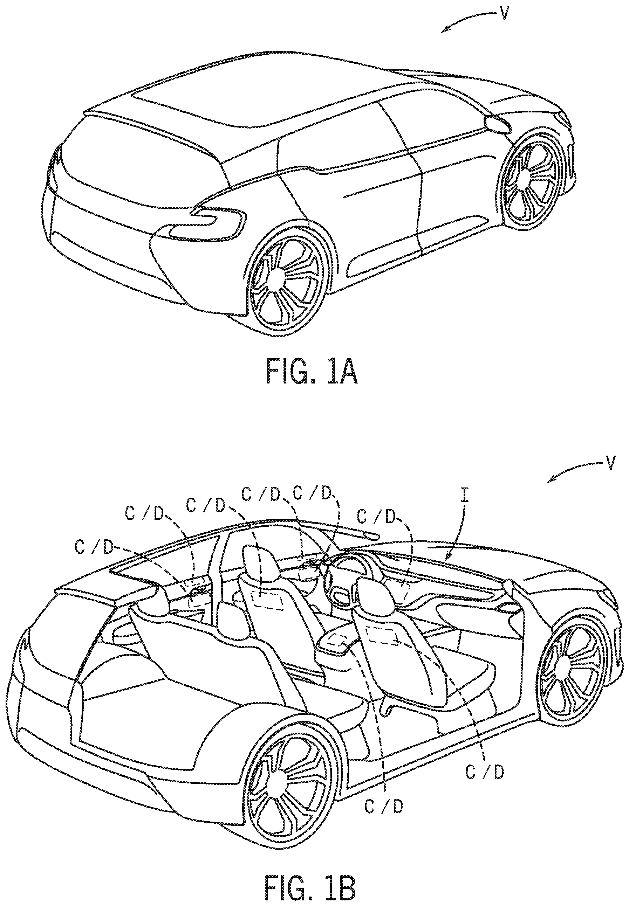

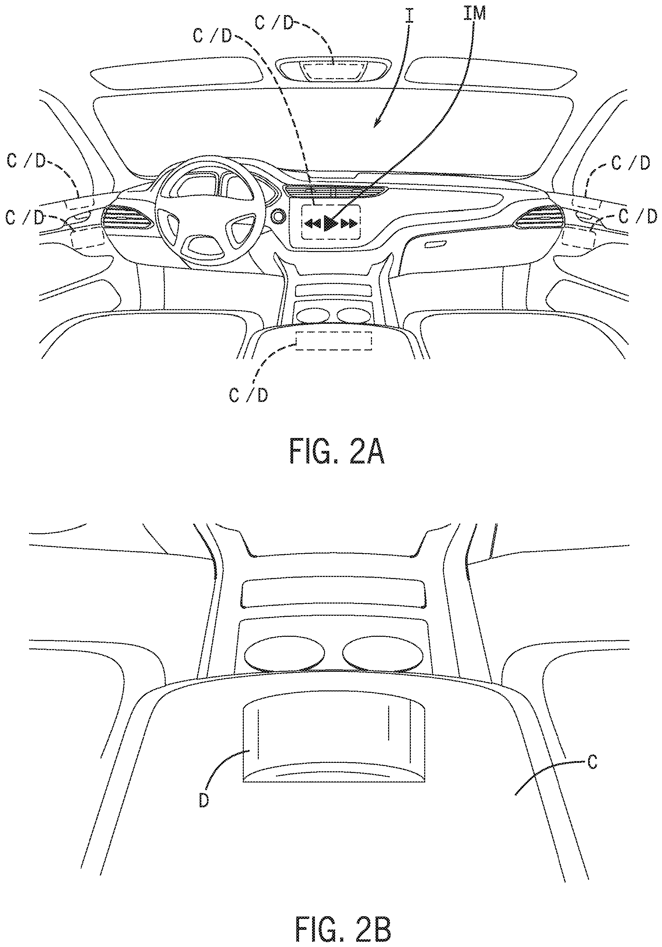

According to an exemplary embodiment as shown schematically in FIGURES 1A and 1B, a vehicle V may include a vehicle interior I. The vehicle interior may provide components C such as panels, consoles, compartments, etc. Components C may provide a display D (e.g. display panel, illumination, data display, display screen, etc.) to present information, alerts, entertainment, data, etc. to a vehicle occupant (e.g. data/information as may be available from various sources such as image IM as shown in FIGURE 2A). The vehicle interior may be provided with a variety of display configurations in a variety of positions and locations to serve a variety of purposes. See e.g. FIGURES 1B and 2A-2B.

According to an exemplary embodiment, the component may comprise a trim component, panel, console, etc. provided within the vehicle interior (e.g. instrument panel, door, seat area, cockpit, center area, overhead, etc.). See e.g. FIGURES 1B and 2A-2B.

As indicated schematically according to an exemplary embodiment, the display D of the component may present an image and/or information (e.g. data/information, instrumentation, indicators, controls, entertainment, communications, etc.). See e.g. FIGURE 2A. According to an exemplary embodiment, the component C and/or display D (if provided on the component) may provide a contoured form/shape designed/intended to integrate with the interior design/aesthetic of the vehicle V. See e.g. FIGURES 1B and 2A-2B. According to an exemplary embodiment, the component C may be provided with a visual effect and formed (e.g. shaped/contoured). See e.g. FIGURES 1B, 2A-2B and 9A-9C.

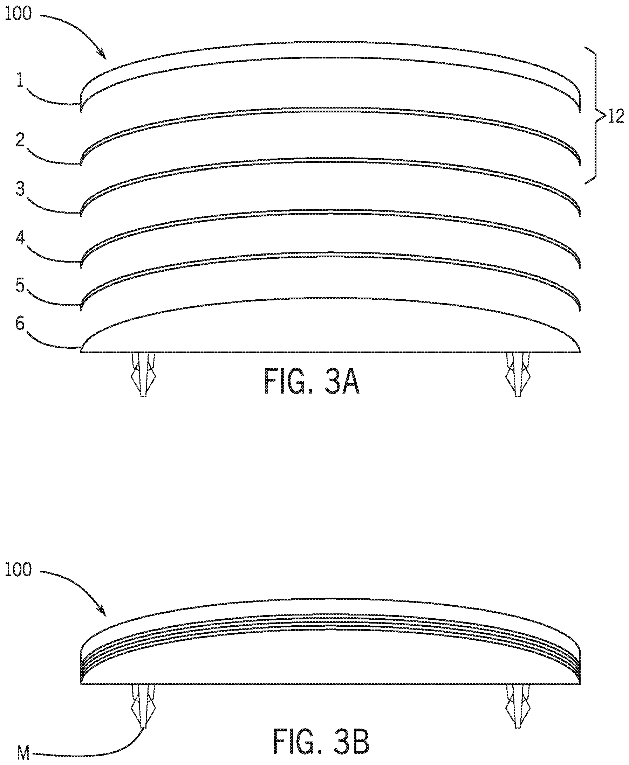

According to an exemplary embodiment as shown schematically in FIGURE 3A, a component 100 for a vehicle interior may comprise a surface intended to be visible to an occupant when the component is installed in the vehicle interior. Component 100 may comprise a base 6, a decorative layer or laminate 4 and a cover 12 comprising an outer layer 1. Cover 12 may comprise an inner layer 2. Decorative layer 4 may be coupled to base 6. Decorative layer 4 may be laminated to base 6, or an adhesive 5 may couple decorative layer 4 and base 6. Cover 12 may be coupled to decorative layer 4. Adhesive 3 may couple cover 12 to decorative layer 4. Adhesive 3 may be configured to transmit light passing from cover 12 to decorative layer 4. Decorative layer 4 may comprise a laminate. Base 6 may comprise a nonplanar surface. Inner layer 2 of cover 12 and outer layer 1 cover 12 may be nonplanar. Inner layer 2 of cover 12 may be configured to align with the nonplanar surface of base 6. Decorative layer 4 may comprise a natural material. Cover 12 may comprise glass. Outer layer 1 of cover 12 may comprise glass. Cover 12 may comprise plastic. Outer layer 1 of cover 12 may comprise plastic. Inner layer 2 of cover 12 may comprise at least a portion configured to prevent visibility of decorative layer 4. Inner layer 2 may comprise at least one of (a) an electrical circuit (b) a sensor (c) a capacitive switch (d) a capacitive switch sensor. Decorative layer 4 may be configured to provide a visual effect. Cover 12 may be configured to provide a visual effect. The visual effect of decorative layer 4 and the visual effect of cover 12 may be configured to provide a composite visual effect.

According to an exemplary embodiment as shown schematically in FIGURE 3A, a component for a vehicle interior 100 may provide a composite visual effect. Component 100 may comprise a base 6, a decorative layer 4 and a cover 12. Decorative layer 4 may provide a visual effect. Decorative layer 4 may be coupled to base 6. Cover 12 may provide a visual effect. Cover 12 may be coupled over decorative layer 4. The composite visual effect may be provided by the visual effect of decorative layer 4 and the visual effect of cover 12. Base 6 may comprise a nonplanar surface. Cover 12 may comprise an inner surface 2 and an outer surface 1. The inner surface 2 of cover 12 and the outer surface 1 of cover 12 may be nonplanar. The inner surface 2 of cover 12 may be configured to align with the nonplanar surface of base 6. The outer surface 1 of cover 12 may comprise at least one of (a) glass, (b) plastic. Cover 12 may comprise a nonplanar form. Decorative layer 4 may be laminated to base 6. Decorative layer 4 may comprise a sheet. Component 100 may comprise an adhesive 3 configured to couple decorative layer 4 to cover 12. Adhesive 3 may be configured to transmit light from cover 12 to decorative layer 4. The visual effect of cover 12 may comprise at least one of: (a) transparent; (b) translucent; (c) opaque; (d) paint; (e) coating; (f) gradient; (g) transition; (h) shading; (i) material of construction; (j) plastic; (k) molded plastic; (l) contour; (m) surface effect; (n) contour shape; (o) nonplanar shape; (p) speckling; (q) partially transparent; (r) partially translucent; (s) partially opaque. The visual effect of decorative layer 4 may comprise at least one of: (a) composite wood; (b) metal; (c) texture; (d) wood; (e) wood grain; (f) laminate surface; (g) natural material; (h) authentic material; (i) foil; (j) contour; (k) curved edge; (l) fiber; (m) fabric; (n) stone; (o) mineral. The visual effect of cover 12 may comprise a transition between two visual effects. Cover 12 may comprise a film 2.

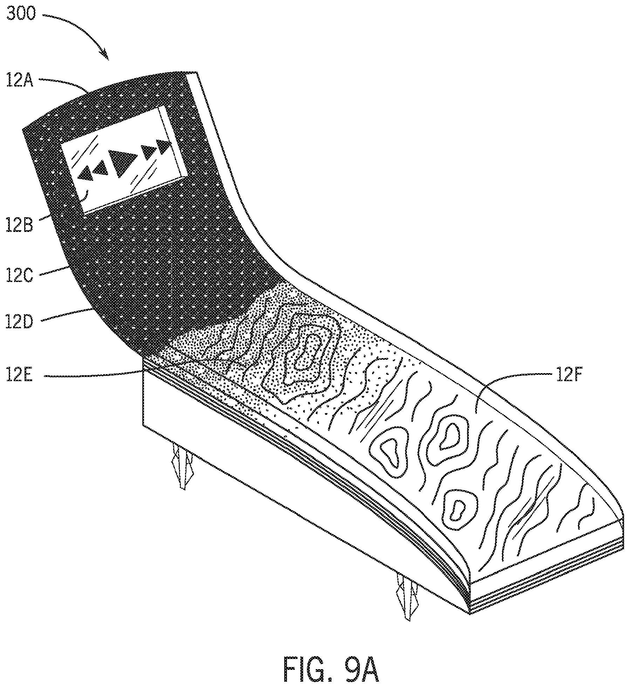

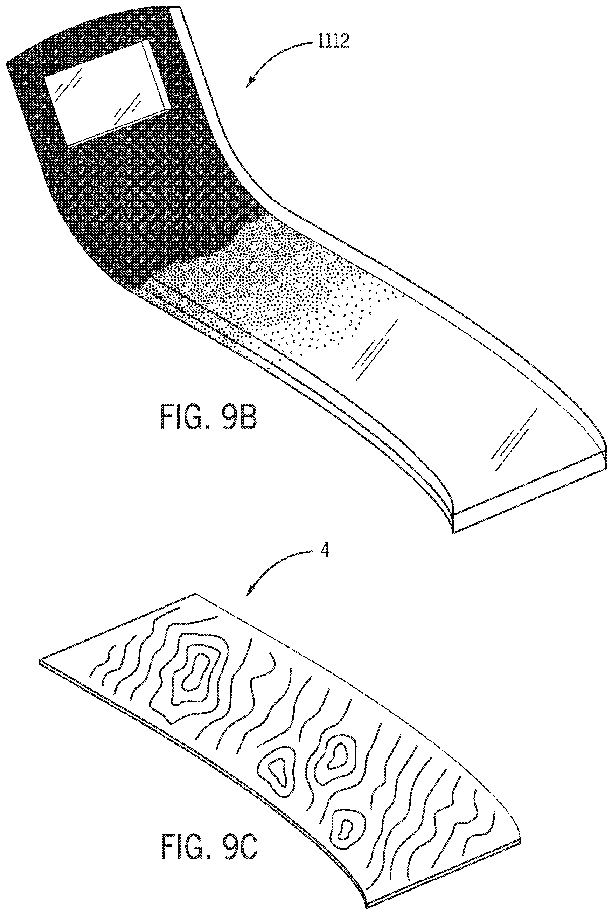

According to an exemplary embodiment as shown schematically in FIGURE 3A, the component 100 may comprise a multi-section/multi-layer construction with an outer layer or cover 1 and a sheet material shown as decorative layer 4 that may be provided (e.g. attached, mounted, affixed, installed, etc.) on a base or structure shown as base/substrate 6. See e.g. FIGURES 3B and 9A. As shown schematically in FIGURES 3A and 3B, the cover 12 may be provided with a film layer 2 and attached to the sheet material 4 with an adhesive shown as transparent/optically clear adhesive sheet 3; the sheet material 4 may be attached to the base 6 by an adhesive shown as adhesive sheet 5 to form the component 100. See e.g. FIGURES 2A-2B and 3B.

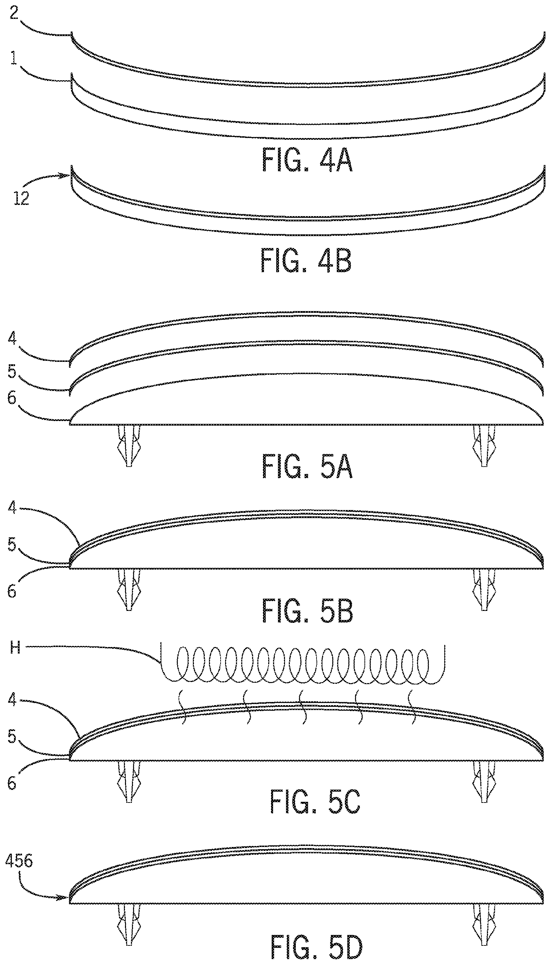

According to an exemplary embodiment as shown schematically in FIGURES 4A and 4B, a cover assembly 12 may be formed for the component by attachment of film 2 (if used) to cover/layer 1. As shown indicated schematically in FIGURES 5A-5D, a base assembly 456 may be formed for the component by attachment of sheet material/decorative layer 4 to the base/substrate 6 with a bond by adhesive 5 (shown as a cured adhesive with curing by heat from a heating element H).

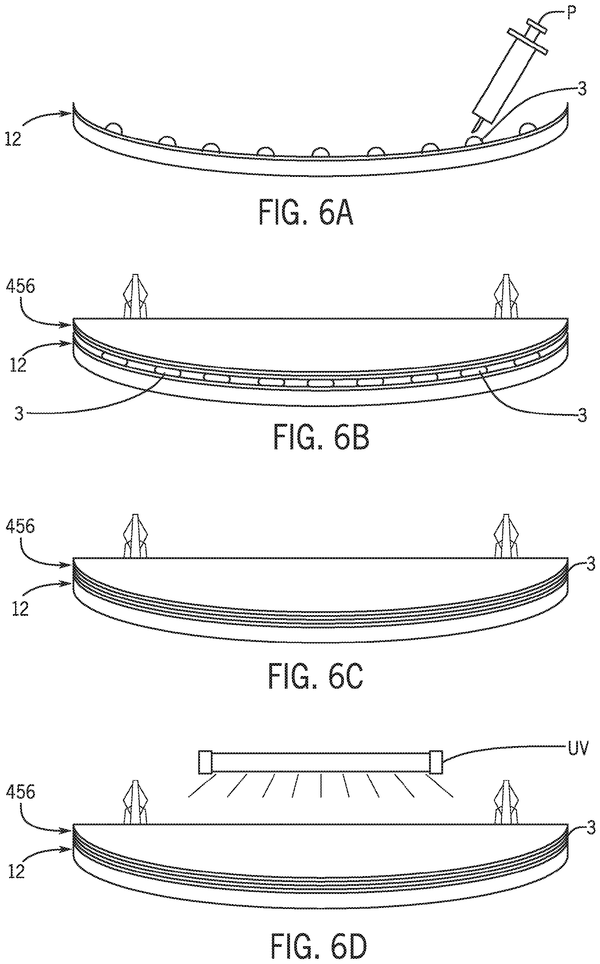

According to an exemplary embodiment as shown schematically in FIGURES 6A-6D, the cover assembly 12 may be attached/bonded to the base assembly 456 by an adhesive shown as (transparent/optically clear) liquid adhesive 3 applied from a dispensing system shown as dispenser P; the adhesive may be cured/set after application to form the bond between cover assembly 12 and base assembly 456 using a curing system shown as ultra-violet curing system UV. See FIGURE 6D.

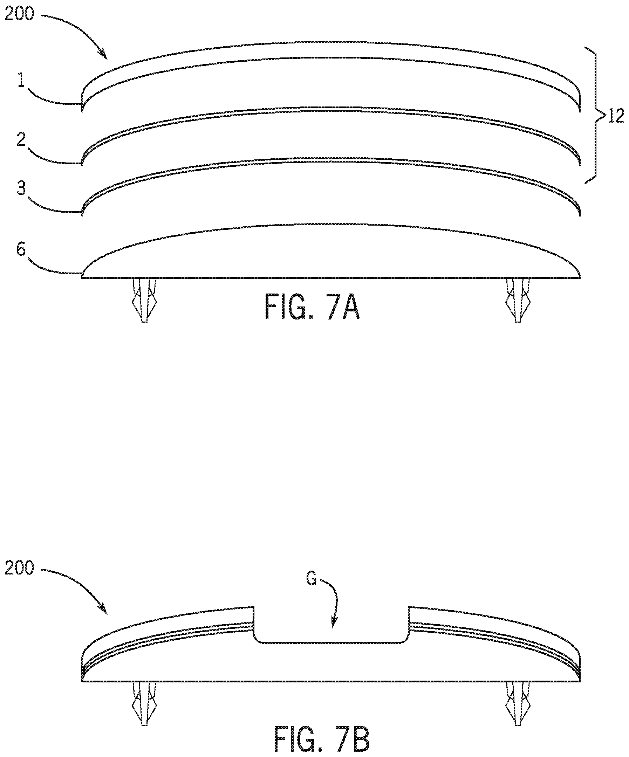

According to an exemplary embodiment as shown schematically in FIGURES 7A and 7B, a component for a vehicle interior 200 may comprise a surface intended to be visible to an occupant when the component is installed in the vehicle interior. Component 200 may comprise a base 6, an adhesive 3 and a cover 12 comprising an outer layer 1. Cover 12 may comprise an inner layer 2. Base 6 may comprise a decorative base. Cover 12 may be coupled to decorative base 6 by adhesive 3. Adhesive 3 may be configured to transmit light passing from cover 12 to decorative base 6. Decorative base 6 may comprise a nonplanar surface. Inner layer 2 of cover 12 and outer layer 1 cover 12 may be nonplanar. Inner layer 2 of cover 12 may be configured to align with the nonplanar surface of decorative base 6. Decorative base 6 may comprise a natural material. Cover 12 may comprise glass. Outer layer 1 of cover 12 may comprise glass. Cover 12 may comprise plastic. Outer layer 1 of cover 12 may comprise plastic. Inner layer 2 of cover 12 may comprise at least a portion configured to prevent visibility of decorative base 6. Inner layer 2 may comprise at least one of (a) an electrical circuit (b) a sensor (c) a capacitive switch (d) a capacitive switch sensor. Cover 12 may comprise an opening or gap G. Opening G may be configured to at least one of (a) expose decorative base 6 or (b) uncover decorative base 6. The surface intended to be visible to an occupant may comprise a first portion comprising cover 12 and a second portion comprising decorative base 6. Decorative base 6 may be configured to provide a visual effect. Cover 12 may be configured to provide a visual effect. The visual effect of decorative base 6 and the visual effect of cover 12 may be configured to provide a composite visual effect.

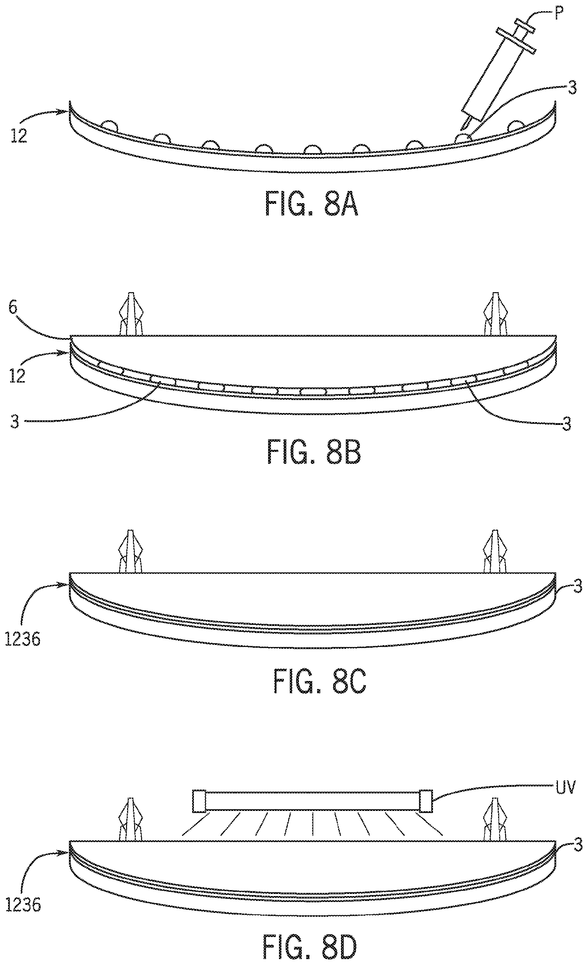

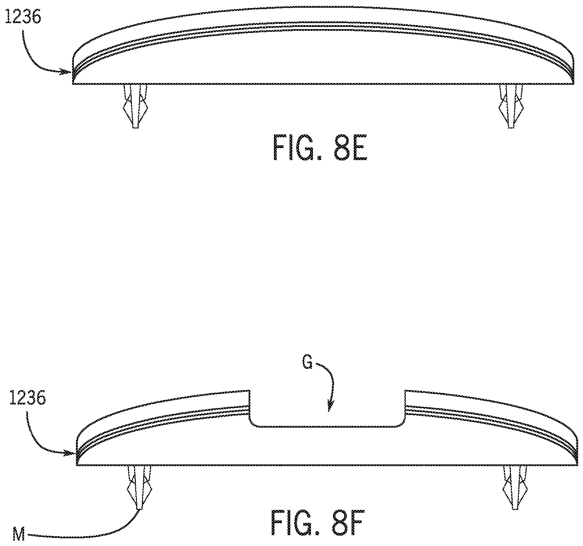

According to an exemplary embodiment as shown schematically in FIGURES 7A and 7B, the component 200 may comprise (in whole or in sections/portions) or multi-layer construction where the cover 1 (with film 2 if used) is bonded to base/substrate 6 by adhesive material shown as adhesive sheet 3. See also FIGURES 8A-8D (e.g. formed component 1236). As shown schematically, the multi-layer construction may comprise a formed (e.g. molded, machined, etc.) gap G or space shown as exposing the material/surface of base 6 (e.g. to provide a functional and/or visual effect) for component 200. See e.g. FIGURES 7B and 8F.

According to an exemplary embodiment as shown schematically in FIGURES 8A-8E, adhesive material 3 applied to attach/bond layers of the component (shown as component 1236) will be actuated/cured (if required) such as by application from an element/system (such as ultra-violet light system UV) to form the multi-layer construction/assembly of the component. See e.g. FIGURES 8E and 8F. See also FIGURE 5C (showing heating system H). The formed/contoured shape of the component 1236 (as assembled) may comprise formed/bonded layers conforming to the design/intent of the component. See also FIGURES 2B, 3B, 9A and 15B.

According to an exemplary embodiment as shown schematically in the FIGURES, the component is configured to be installed/mounted (and integrated) in the vehicle interior (e.g. using mounting elements shown schematically as elements M). The multi-layer construction of the component may provide a structure with a visual effect provided by the decorative layer/sheet material conformed between the cover and the base/substrate; as shown schematically the component may be provided with the visual effect of the material (e.g. wood, etc.) of the decorative layer/sheet visible through the transparent section/body of the cover. See e.g. FIGURES 9A-9C.

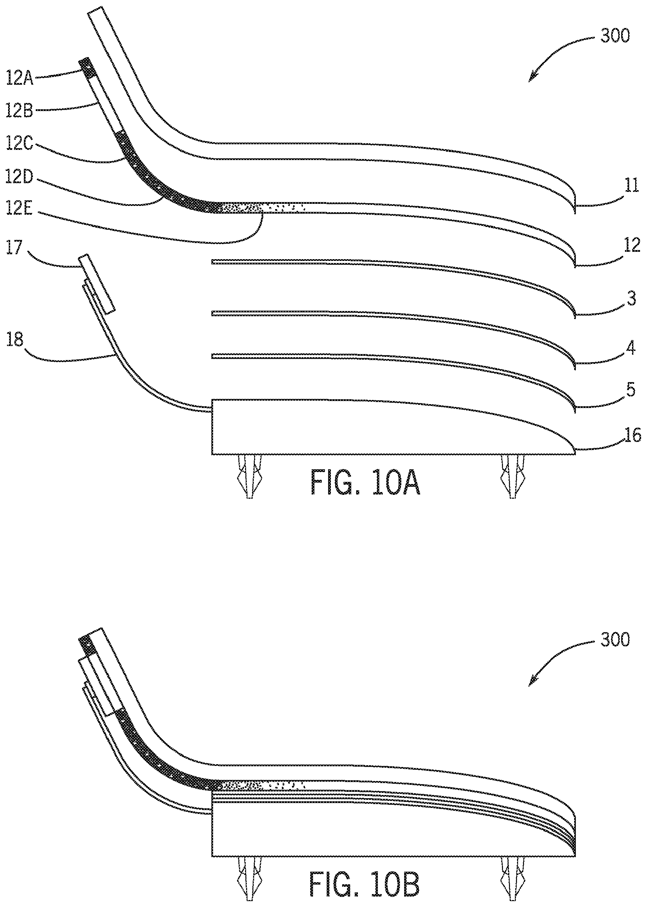

According to an exemplary embodiment as shown schematically in FIGURES 9A -9C and 10A, a component for a vehicle interior 300 may comprise a surface intended to be visible to an occupant when the component is installed in the vehicle interior. Component 300 may comprise a base 16, a decorative layer or laminate 4 and a cover 1112 comprising an outer layer 11. Cover 1112 may comprise an inner layer 12. Decorative layer 4 may be coupled to base 16. Decorative layer 4 may be laminated to base 16, or an adhesive 5 may couple decorative layer 4 and base 16. Cover 1112 may be coupled to decorative layer 4. Adhesive 3 may couple cover 1112 to decorative layer 4. Adhesive 3 may be configured to transmit light passing from cover 1112 to decorative layer 4. Decorative layer 4 may comprise a laminate. Base 16 may comprise a nonplanar surface. Inner layer 12 of cover 1112 and outer layer 11 of cover 1112 may be nonplanar. Inner layer 12 of cover 1112 may be configured to align with the nonplanar surface of base 16. Decorative layer 4 may comprise a natural material. Cover 1112 may comprise glass. Outer layer 11 of cover 1112 may comprise glass. Cover 1112 may comprise plastic. Outer layer 11 of cover 1112 may comprise plastic. Inner layer 12 of cover 1112 may comprise at least a portion configured to prevent visibility of decorative layer 4. Inner layer 12 of cover 1112 may comprise at least one of (a) ink 12A, 12C, 12D, 12E (b) paint 12A, 12C, 12D, 12E (c) a foil 12A, 12C, 12D, 12E (d) a film 12A, 12C, 12D, 12E configured to prevent illumination to pass from a display 17 to outer layer 11 of cover 1112. Inner layer 12 of cover 1112 may comprise at least a portion 12B configured to allow illumination to pass from display 17 to outer layer 11 of cover 1112. Inner layer 12 may comprise at least one of (a) an electrical circuit (b) a sensor (c) a capacitive switch (d) a capacitive switch sensor. Decorative layer 4 may be configured to provide a visual effect. Cover 1112 may be configured to provide a visual effect. The visual effect of decorative layer 4 and the visual effect of cover 1112 may be configured to provide a composite visual effect.

According to an exemplary embodiment as shown schematically in FIGURES 9A and 10A, a component for a vehicle interior 300 may provide a composite visual effect. Component 300 may comprise a base 16, a decorative layer 4 and a cover 1112. Decorative layer 4 may provide a visual effect. Decorative layer 4 may be coupled to base 16. Cover 1112 may provide a visual effect. Cover 1112 may be coupled over decorative layer 4. The composite visual effect may be provided by the visual effect of decorative layer 4 and the visual effect of cover 1112. Base 16 may comprise a nonplanar surface. Cover 1112 may comprise an inner surface 12 and an outer surface 11. The inner surface 12 of cover 1112 and the outer surface 11 of cover 1112 may be nonplanar. The inner surface 12 of cover 1112 may be configured to align with the nonplanar surface of base 16. The outer surface 11 of cover 1112 may comprise at least one of (a) glass, (b) plastic. Cover 1112 may comprise a nonplanar form. Decorative layer 4 may be laminated to base 16. Decorative layer 4 may comprise a sheet. Component 300 may comprise an adhesive 3 configured to couple decorative layer 4 to cover 1112. Adhesive 3 may be configured to transmit light from cover 1112 to decorative layer 4. The visual effect of cover 1112 may comprise at least one of: (a) transparent; (b) translucent; (c) opaque; (d) paint; (e) coating; (f) gradient; (g) transition; (h) shading; (i) material of construction; (j) plastic; (k) molded plastic; (l) contour; (m) surface effect; (n) contour shape; (o) nonplanar shape; (p) speckling; (q) partially transparent; (r) partially translucent; (s) partially opaque. The visual effect of decorative layer 4 may comprise at least one of: (a) composite wood; (b) metal; (c) texture; (d) wood; (e) wood grain; (f) laminate surface; (g) natural material; (h) authentic material; (i) foil; (j) contour; (k) curved edge; (l) fiber; (m) fabric; (n) stone; (o) mineral. The visual effect of cover 1112 may comprise a transition between two visual effects. Cover 1112 may comprise a film 12. Film 12 may comprise at least a portion configured to absorb light from a display 17.

According to an exemplary embodiment as shown schematically in FIGURES 9A -9C, component 300 may comprise a multi-layer/multi-section construction providing the physical form/shape and multiple visual effects (e.g. facilitation, aesthetic integration) for the vehicle interior. As shown schematically, the component 300 is provided with a cover 1112 that provides/define the form/shape (e.g. molded plastic, glass, polymer, etc. material) over a sheet material shown as laminate 4 that provides/defines the general visual effect (e.g. natural/authentic material such as wood with visible texture/grain appearance through transparent section/body of cover) on the base/substrate structure. See FIGURE 9A. According to an exemplary embodiment as shown schematically in FIGURES 9A-9C and 10A, the cover 1112 comprises a generally transparent body section 12F and other sections such as transparent section 12B for display 17 and opaque sections 12A, 12C, 12D and transition/speckled sections 12E. See FIGURE 9A. As indicated schematically in FIGURES 9A-9C, the sheet material shown as laminate sheet 4 and the cover as comprised/formed with multiple sections (e.g. generally transparent, transition/speckled, opaque/colored, etc.) may combine to provide a composite visual effect (e.g. blended, integrated, sectioned, etc.) for the component shown as component 300. See also FIGURES 10A-10B, 11A-11B, 12A-12D and 13A-13D. As shown schematically in FIGURES 10A and 10B, the component of multi-layer/multi-section construction may provide a structure 18 with a display panel 17 (e.g. visible through a transparent section 12B of the cover). See also FIGURES 1B and 2A-2B.

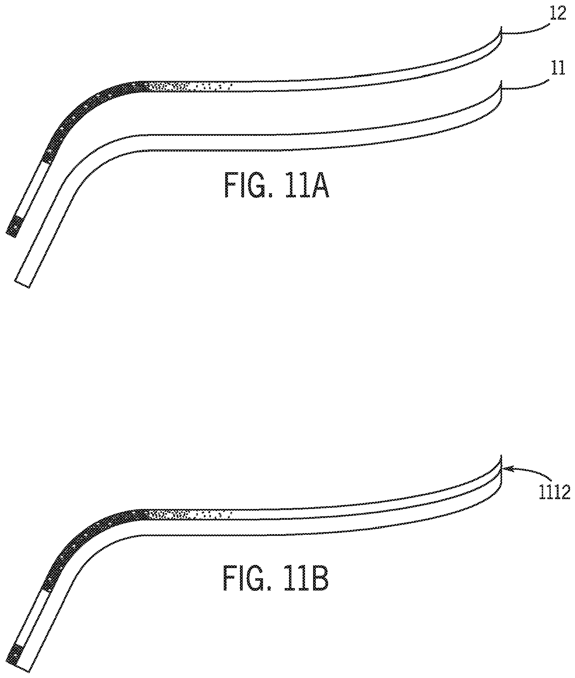

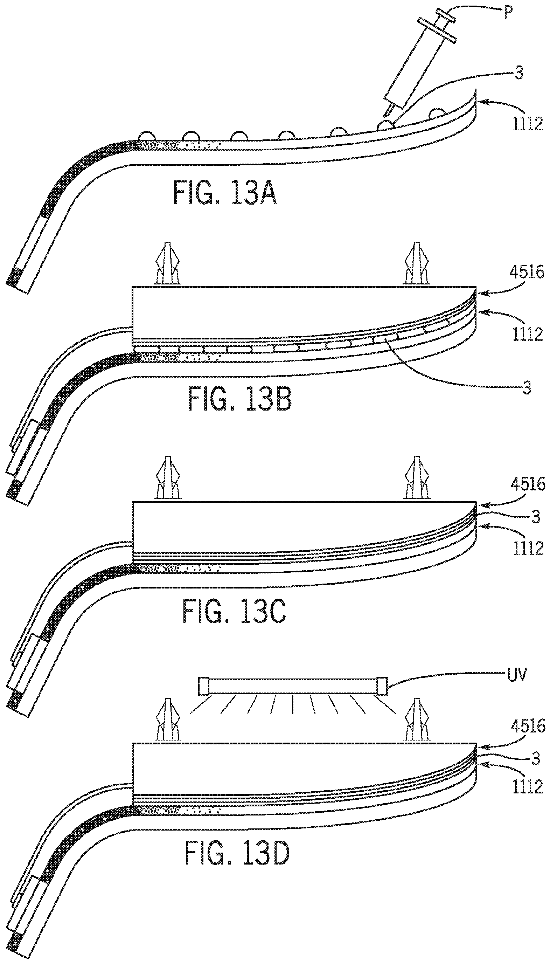

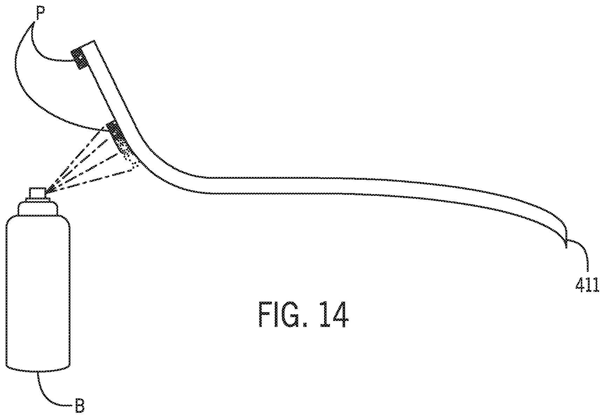

According to an exemplary embodiment as shown schematically in FIGURES 11A through 13D, a method of manufacturing a vehicle trim component may comprise the steps of providing a base 16, joining a decorative layer 4 to base 16 to create a decorative base 4516 and joining a cover 1112 to decorative layer 4. At least a portion of cover 1112 may be configured to allow illumination to pass from cover 1112 to decorative base 4516. The method may comprise the step of applying at least one of (a) ink (b) paint (c) a foil (d) a film to an inner surface 12 of cover 1112 to create a cover assembly 1112 comprising a transparent portion and a partially opaque portion. Cover 1112 may comprise an inner layer 12 and an outer layer 11. At least a portion of inner layer 12 of cover 1112 may be configured to transmit light passing from a display to outer layer 11 of cover 1112. The method may comprise the step of applying at least one of (a) ink (b) paint (c) a foil (d) a film to outer layer 11 to create inner layer 12. At least a portion of inner layer 12 may be configured to prevent transmission of light passing from outer layer 11 to decorative base 4516. The method may comprise the step of applying coating to at least a portion of cover 1112 to create a visual effect as shown schematically in FIGURE 14. Inner layer 12 of cover 1112 may comprise at least one of (a) an electrical circuit (b) a sensor (c) a capacitive switch (d) a capacitive switch sensor. Joining cover 1112 to decorative layer 4 may comprise applying an adhesive 3 to at least one of (a) cover 1112 or (b) decorative layer 4. Adhesive 3 may be configured to allow illumination to pass from cover 1112 to decorative base 4516. The method may comprise the step of creating an opening in cover 1112. The opening may be configured to at least one of (a) expose decorative base 4516 (b) uncover decorative base 4516.

According to an exemplary embodiment as shown schematically in FIGURES 11A, 11B and 14, the visual effect/structure at the cover of the component may be provided by a layer/material shown as sheet material or by application of a material layer (such as coating, paint, enamel, lacquer, etc.) by an applicator or dispenser (shown as spray dispenser B); as shown schematically the layer or coating may be applied in a manner to create multiple sections/transitions with opaque and/or transparent and/or translucent areas to provide an intended visual effect through cover (e.g. with laminate).

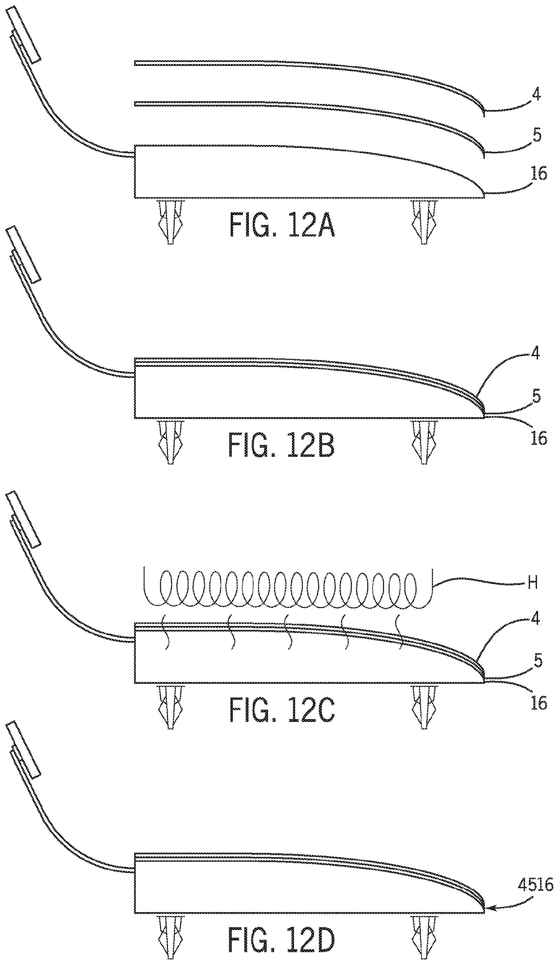

As indicated schematically in FIGURES 12A-12D, the laminate sheet 4 is bonded to the base/substrate 16 by an adhesive (shown as adhesive sheet/tape or strip 5) that may be activated and/or cured (e.g. by application of heat from heating element H) to form a base assembly 1415 for application of the cover/cover assembly 1112 (see FIGURES 9B and 11B) bonded by an adhesive (shown as liquid adhesive 3) that may be activated and/or cured by application of ultra-violet light (e.g. from system UV) to form the component (e.g. cover assembly on base assembly). See also FIGURES 13A-13D.

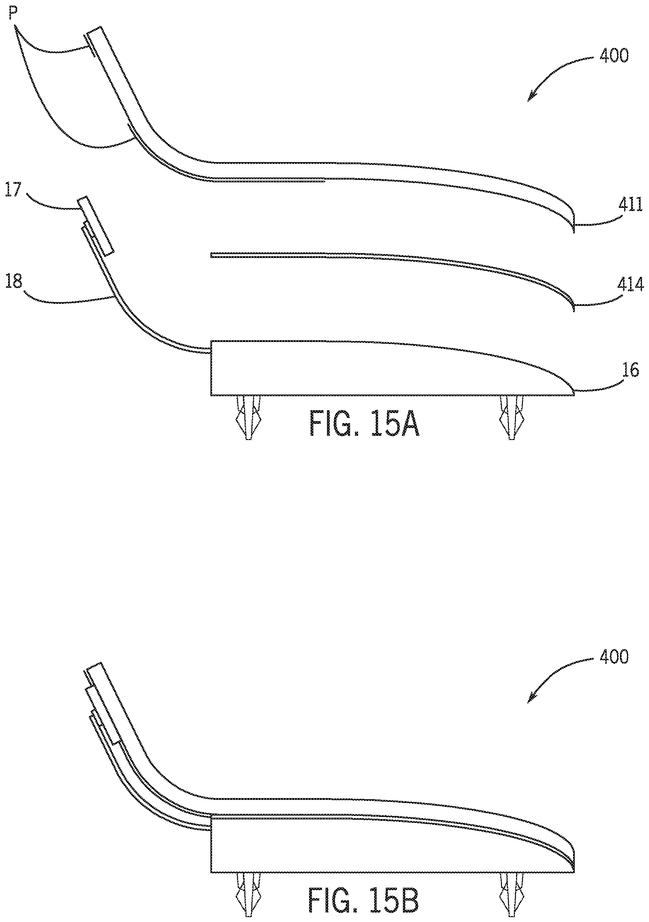

According to an exemplary embodiment as shown schematically in FIGURES 14, 15A and 15B, a component 400 may comprise an outer layer/cover shown as formed structure 411 with a coating shown as paint P applied (e.g. from dispensing system B); cover/structure 411 with coating P may be bonded to a sheet material shown as laminate 414 (e.g. by suitable bonding/attachment) and may be attached/bonded to the base or substrate/structure 16 to form the component 400. As shown schematically, the visual effect or appearance of the component 400 may be a composite effect of the appearance/form of the cover 411 with coating P (e.g. inner layer) and appearance of the laminate/sheet material 414 (e.g. visible through transparent/translucent sections of the cover). See FIGURES 15A-15B. See also FIGURES 9A-9C. According to an exemplary embodiment as indicated schematically in FIGURES 15A and 15B, the component 400 may provide a display panel 17 on structure 18 of base 16 visible at cover 411 (e.g. through a transparent section on cover). As shown schematically, lighting beneath cover (e.g. from base) may be made visible through transparent/translucent sections provided in the cover (see FIGURE 9A).

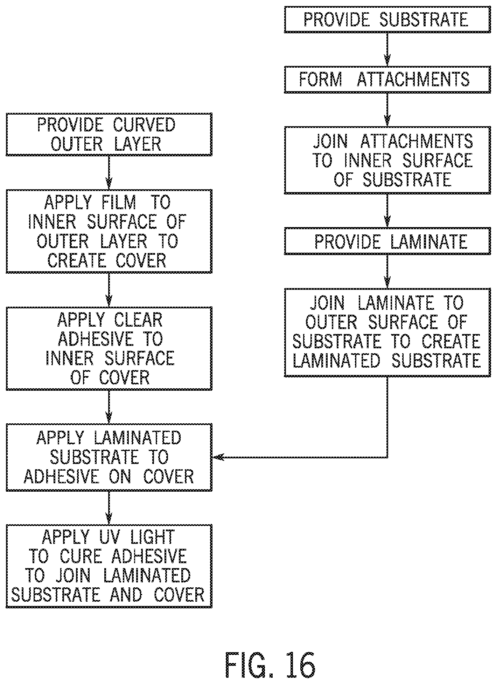

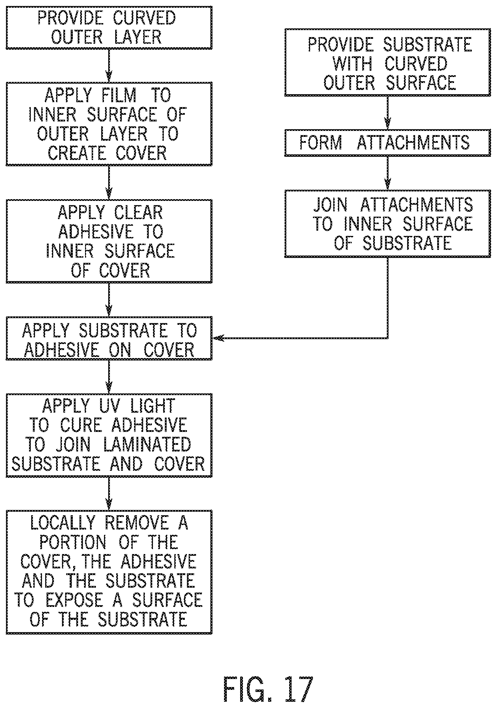

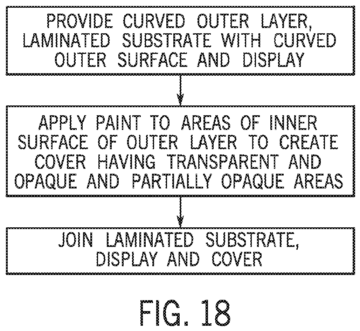

Methods of producing the component are shown schematically according to an exemplary embodiment in FIGURES 16-18.

According to an exemplary embodiment, a component for a vehicle interior may provide a form and a composite visual effect. The component may comprise a base, a material layer providing a visual effect and coupled to the base and a cover assembly providing a visual effect and coupled over the material layer; the composite visual effect may be provided by the visual effect of the material layer and the visual effect of the cover assembly. The base may comprise a nonplanar surface and the cover assembly may comprise an inner surface and an outer surface; the inner surface of the cover assembly and the outer surface of the cover assembly may be nonplanar. The inner surface of the cover may be configured to align with the nonplanar surface of the base. The base may be nonplanar. The material layer may be laminated to the base. The component may comprise an adhesive configured to couple the material layer to the cover assembly. The adhesive may be configured to transmit light from the cover assembly to the material layer. The outer surface may comprise at least one of (a) glass or (b) plastic. The visual effect of the cover assembly may comprise at least one of: (a) transparent; (b) translucent; (c) opaque; (d) paint; (e) coating; (f) gradient; (g) transition; (h) shading; (i) material of construction; (j) plastic; (k) molded plastic; (l) contour; (m) surface effect; (n) contour shape; (o) nonplanar shape; (p) speckling; (q) partially transparent; (r) partially translucent; (s) partially opaque. The visual effect of the material layer may comprise at least one of: (a) composite wood; (b) metal; (c) texture; (d) wood; (e) wood grain; (f) laminate surface; (g) natural material; (h) authentic material; (i) foil; (j) contour; (k) curved edge; (l) fiber; (m) fabric; (n) stone; (o) mineral, etc. The visual effect of the cover assembly may comprise a transition or gradient (e.g. sharp or gradual) between two visual effects.

According to an exemplary embodiment, a component for a vehicle interior may provide a form and a composite visual effect. The component may comprise a base, a laminate sheet providing a visual effect and coupled to the base and a cover assembly providing a visual effect and coupled over the laminate sheet; the composite visual effect may be provided by the visual effect of the laminate sheet and the visual effect of the cover assembly.

According to an exemplary embodiment, a component for a vehicle interior may comprise a surface intended to be visible to an occupant when the component is installed in the vehicle interior. The component may comprise a substrate, a decorative layer coupled to substrate and a cover coupled to the decorative layer comprising an outer layer and a film. The decorative layer may comprise a laminate comprising a natural material. The substrate may comprise a nonplanar surface and the cover may comprise an inner surface and an outer surface; the inner surface of the cover and the outer surface of the cover may be nonplanar. The inner surface of the cover may be configured to align with the nonplanar surface of the substrate; the substrate may be nonplanar. The laminate may be laminated to the substrate. The component may comprise an adhesive configured to couple the laminate to the cover; the adhesive may be configured to allow illumination to pass from the cover to the laminate. The outer layer may comprise at least one of (a) glass or (b) plastic. The film may comprise at least a portion configured to prevent illumination to pass from the display to the cover. See generally FIGURES and Appendix.

### Materials/Construction

According to an exemplary embodiment, the method comprises use of thin laminates of authentic materials to provide the look of the authentic materials without the cost and mass of using machined blocks of the authentic materials. See e.g. FIGURES 3A-3B, 9A-9C, 14, 15A-15C and 16-18.

According to an exemplary embodiment, a layer (e.g. laminate, laminate sheet, strip, sheet, composite, layer, etc.) of the authentic material (or visual environment) may be laminated to base or substrate to form the component; the component may provide or contain attachments, mounting features and any other necessary features required for normal component operation. See e.g. FIGURES 3A-3B, 9A-9C, 14, 15A-15C and 16-18.

### Outer Layer

According to an exemplary embodiment, the outer layer may be made of glass or plastic. Plastic outer layers may be made of vacuum formed acrylic or cast urethane. The layer may be clear or tinted (not opaque). It is typically desired to provide the outer layer have a contoured or curved surface for styling and harmony with other parts of the vehicle interior. See e.g. FIGURES 3A-3B, 9A-9C, 14, 15A-15C and 16-18.

### Inner Layer or Film

According to an exemplary embodiment, when the outer layer is made of glass, a clear or tinted film is applied to the glass for safety. In the event of a shattering or breaking of the glass, the film prevents shards of the glass from separating away. See e.g. FIGURES 3A-3B, 9A-9C, 14, 15A-15C and 16-18.

According to an exemplary embodiment, the film may also be designed to provide decoration or to make certain areas of the outer layer opaque or blacked out. See e.g. FIGURES 3A-3B, 9A-9C, 14, 15A-15C and 16-18.

### Assembly of Film and Outer Layer to Create a Cover

According to an exemplary embodiment, depending on the material used for the outer layer, multiple methods may be used to assemble the film and the outer layer to create a cover. See e.g. FIGURES 16-18.

According to an exemplary embodiment, when the outer layer is made of plastic, the following methods may be used: in mold decoration; in mold lamination; printing ink on the interior surface of the outer layer, or a portion; spraying ink on the interior surface of the outer layer, or a portion. See e.g. FIGURES 3A-3B, 9A-9C, 14, 15A-15C and 16-18.

According to an exemplary embodiment, when the outer layer is made of glass, the film may be adhered to the interior surface of the glass using pressure and a bladder that is used to push any air gaps between the film and the glass to the periphery of the film and ultimately away from the film and the glass. See e.g. FIGURES 3A-3B, 9A-9C, 14, 15A-15C and 16-18.

### Assembly of Laminate and Base

According to an exemplary embodiment, an adhesive may be used to assemble the laminate to the base; heat and pressure may be used in the process; the laminate is thin and flexible enough to conform to the contour of the base. See e.g. FIGURES 3A-3B, 9A-9C, 14, 15A-15C and 16-18.

### Assembly of Cover to Laminated Base

According to an exemplary embodiment, an optically clear adhesive may be used to assemble the cover to the laminated base to ensure the laminate is visible to vehicle occupants. See e.g. FIGURES 3A-3B, 9A-9C, 14, 15A-15C and 16-18.

According to an exemplary embodiment, the component may be formed with a base made from an authentic material such as wood, metal, stone, etc. attached or bonded to a cover (e.g. clear/transparent cover or layer). Material of the cover and the base may then be machined away to expose the authentic material just below the surface of the cover. The component provides an occupant to experience the touch and feel of the authentic material. According to an exemplary embodiment, in providing the component the machined areas may be made or formed in various shapes or patterns (e.g. decorative shape, patterns, etc.) or may form features in the component such as trays, storage locations or pockets, etc. See e.g. FIGURES 3A-3B, 9A-9C, 14, 15A-15C and 16-18.

It is important to note that the present inventions (e.g. inventive concepts, etc.) have been described in the specification and/or illustrated in the FIGURES of the present patent document according to exemplary embodiments; the embodiments of the present inventions are presented by way of example only. The construction and/or arrangement of the elements of the inventive concepts embodied in the present inventions as described in the specification and/or illustrated in the FIGURES is illustrative only. Although exemplary embodiments of the present inventions have been described in detail in the present patent document, a person of ordinary skill in the art will readily appreciate that equivalents, modifications, variations, etc. of the subject matter of the exemplary embodiments and alternative embodiments are possible. The scope of the present inventions is not intended to be limited to the subject matter (e.g. details, structure, functions, materials, acts, steps, sequence, system, result, etc.) described in the specification and/or illustrated in the FIGURES of the present patent document.

It is also important to note that according to exemplary embodiments the present inventions may comprise conventional technology (e.g. as implemented and/or integrated in exemplary embodiments, modifications, variations, combinations, equivalents, etc.) or may comprise any other applicable technology (present and/or future) with suitability and/or capability to perform the functions and processes/operations described in the specification and/or illustrated in the FIGURES. All such technology (e.g. as implemented in embodiments, modifications, variations, combinations, equivalents, etc.) is considered to be within the scope of the present inventions of the present patent document.
comprise any other applicable technology (present and/or future) with suitability and/or capability to perform the functions and processes/operations described in the specification and/or illustrated in the FIGURES. All such technology (e.g. as implemented in embodiments, modifications, variations, combinations, equivalents, etc.) is considered to be within the scope of the present inventions of the present patent document.

## Claims

1. A component (100, 300, 400) for a vehicle interior with a surface intended to be visible to an occupant when the component (100, 300, 400) is installed in the vehicle interior comprising:
(a) a base (6, 16);
(b) a decorative layer (4) coupled to the base; and
(c) a cover (12, 411, 1112) coupled to the decorative layer (4) comprising an outer layer (1, 11) and configured to provide a visual effect;
wherein the decorative layer (4) comprises a natural material configured to provide a visual effect;
wherein the cover (12, 411, 1112) comprises an inner layer (2, 12) comprising at least a portion configured to prevent visibility of the decorative layer (4);
wherein the cover (12, 411, 1112) comprises glass;
wherein the inner layer (2, 12) of the cover (12, 411, 1112) comprises at least one of (a) an electrical circuit; (b) a sensor; (c) a capacitive switch; (d) a capacitive switch sensor.

2. The component (100, 300, 400) of Claim 1 wherein the decorative layer (4) comprises at least one of (a) a laminate; (b) a sheet; (c) a veneer; (d) a film.

3. The component (100, 300, 400) of Claim 1 or 2 wherein the base (6, 16) comprises a nonplanar surface; wherein the inner layer (2, 12) of the cover (12, 411, 1112) and the outer layer (1, 11) of the cover (12, 411, 1112) are nonplanar; wherein the inner layer (2, 12) of the cover (12, 411, 1112) is configured to align with the nonplanar surface of the base (6, 16).

4. The component (100, 300, 400) of one of Claims 1 to 3 wherein the inner layer (2, 12) of the cover (12, 411, 1112) is configured to prevent illumination to pass from a display (17) to the outer layer (1, 11) of the cover (12, 411, 1112); wherein the inner layer (2, 12) of the cover (12, 411, 1112) comprises at least one of (a) ink; (b); paint; (c) a foil; (d) a film; (e) a transparent material; (f) a translucent material; (g) a lighttransmissive material.

5. The component (100, 300, 400) of one of Claims 1 to 4 wherein the cover (12, 411, 1112) comprises an opening configured to at least one of (a) expose the decorative layer (4); (b) uncover the decorative layer (4).

6. The component (100, 300, 400) of one of Claims 1 to 5 further comprising an adhesive (3) configured to couple the decorative layer (4) to the cover (12, 411, 1112); wherein the adhesive (3) is configured to transmit light passing from the cover (12, 411, 1112) to the decorative layer (4).

7. The component (100, 300, 400) of one of Claims 1 to 6 wherein the surface intended to be visible to an occupant comprises a first portion comprising the cover (12, 411, 1112) and a second portion comprising the decorative layer (4); wherein the visual effect of the decorative layer (4) and the visual effect of the cover (12, 411, 1112) are configured to provide a composite visual effect for the surface intended to be visible to the occupant.

8. The component (100, 300, 400) of one of Claims 1 to 7 further comprising a cover assembly comprising the cover (12, 411, 1112) and at least one of (a) an electrical circuit; (b) a sensor; (c) a capacitive switch; (d) a capacitive switch sensor.

9. The component (100, 300, 400) of one of Claims 1 to 8 wherein the visual effect of the cover (12, 411, 1112) comprises at least one of: (a) transparent; (b) translucent; (c) opaque; (d) paint; (e) coating; (f) gradient; (g) transition; (h) shading; (i) material of construction; (j) plastic; (k) molded plastic; (I) contour; (m) surface effect; (n) contour shape; (o) nonplanar shape; (p) speckling; (q) partially transparent; (r) partially translucent; (s) partially opaque.

10. The component (100, 300, 400) of one of Claims 1 to 9 wherein the visual effect of the cover (12, 411, 1112) comprises a transition between two visual effects.

11. The component (100, 300, 400) of one of Claims 1 to 10 wherein the visual effect of the decorative layer (4) comprises at least one of: (a) composite wood; (b) metal; (c) texture; (d) wood; (e) wood grain; (f) laminate surface; (g) natural material; (h) authentic material; (i) foil; (j) contour; (k) curved edge; (I) fiber; (m) fabric; (n) stone; (o) mineral.

12. The component (100, 300, 400) of one of Claims 1 to 11 wherein the decorative layer (4) is laminated to the base (6, 16).

13. A method of manufacturing a vehicle trim component (100, 300, 400) comprising the steps of:
(a) providing a base (6, 16);
(b) joining a decorative layer (4) to the base (6, 16) to create a decorative base; and
(c) joining a cover (12, 411, 1112) to the decorative layer (4);
wherein at least a portion of the cover (12, 411, 1112) is configured to allow illumination to pass from the cover (12, 411, 1112) to the decorative base;
wherein the cover (12, 411, 1112) comprises glass;
wherein the cover (12, 411, 1112) comprises an inner layer (2, 12);
wherein the inner layer (2, 12) comprises at least one of (a) an electrical circuit; (b) a sensor; (c) a capacitive switch; (d) a capacitive switch sensor.

14. The method of Claim 13 wherein the cover (12, 411, 1112) comprises an inner layer (2, 12) and an outer layer (1, 11);
wherein joining the cover (12, 411, 1112) to the decorative layer (4) comprises applying an adhesive (3) to at least one of (a) the cover (12, 411, 1112) (b) the decorative layer (4); wherein the adhesive (3) is configured to allow illumination to pass from the cover (12, 411, 1112) to the decorative base; and/or
wherein the cover (12, 411, 1112) comprises an inner layer (2, 12) and an outer layer (1, 11) and wherein at least a portion of the inner layer (2, 12) of the cover (12, 411, 1112) is configured to transmit light passing from a display to the outer layer (1, 11) of the cover (12, 411, 1112), wherein the method preferably comprises the step of applying at least one of (a) ink (b) paint (c) a foil (d) a film to the outer layer (1, 11) to create the inner layer (2, 12); and/or
wherein at least a portion of the inner layer (2, 12) is preferably configured to prevent transmission of light passing from the outer layer (1, 11) to the decorative base.

15. The method of Claims 13 or 14 comprising the step of applying coating to at least a portion of the cover (12, 411, 1112) to create a visual effect; and/or
comprising the step of creating an opening in the cover (12, 411, 1112); wherein the opening is configured to at least one of (a) expose the decorative base (b) uncover the decorative base; and/or
comprising the step of applying at least one of (a) ink (b) paint (c) a foil (d) a film to an inner surface of the cover (12, 411, 1112) to create a cover assembly comprising a transparent portion and a partially opaque portion.

## Patentansprüche

1. Komponente (100, 300, 400) für einen Fahrzeuginnenraum mit einer Oberfläche, die dazu bestimmt ist, für einen Insassen sichtbar zu sein, wenn die Komponente (100, 300, 400) in dem Fahrzeuginnenraum installiert ist, wobei die Komponente Folgendes aufweist:
(a) eine Basis (6, 16);
(b) eine Dekorschicht (4), die mit der Basis verbunden ist; und
(c) eine Abdeckung (12, 411, 1112), die mit der Dekorschicht (4) verbunden ist, die eine äußere Schicht (1, 11) aufweist und so konfiguriert ist, dass sie einen visuellen Effekt erzeugt;
wobei die Dekorschicht (4) ein natürliches Material aufweist, das so gestaltet ist, dass es einen visuellen Effekt erzeugt;
wobei die Abdeckung (12, 411, 1112) eine innere Schicht (2, 12) aufweist, die mindestens einen Bereich aufweist, der so gestaltet ist, dass er die Sichtbarkeit der Dekorschicht (4) verhindert;
wobei die Abdeckung (12, 411, 1112) Glas aufweist;
wobei die innere Schicht (2, 12) der Abdeckung (12, 411, 1112) mindestens eines der folgenden Elemente aufweist: (a) eine elektrische Schaltung; (b) einen Sensor; (c) einen kapazitiven Schalter; (d) einen kapazitiven Schaltersensor.

2. Komponente (100, 300, 400) nach Anspruch 1, wobei die Dekorschicht (4) mindestens eines der folgenden Elemente aufweist: (a) ein Laminat; (b) eine Platte; (c) ein Furnier; (d) eine Folie.

3. Komponente (100, 300, 400) nach Anspruch 1 oder 2, wobei die Basis (6, 16) eine nicht planare Oberfläche aufweist; wobei die innere Schicht (2, 12) der Abdeckung (12, 411, 1112) und die äußere Schicht (1, 11) der Abdeckung (12, 411, 1112) nicht planar sind; wobei die innere Schicht (2, 12) der Abdeckung (12, 411, 1112) so konfiguriert ist, dass sie mit der nicht planaren Oberfläche der Basis (6, 16) ausgerichtet ist.

4. Komponente (100, 300, 400) nach einem der Ansprüche 1 bis 3, wobei die innere Schicht (2, 12) der Abdeckung (12, 411, 1112) so konfiguriert ist, dass sie verhindert, dass Beleuchtung von einer Anzeige (17) zu der äußeren Schicht (1, 11) der Abdeckung (12, 411, 1112) gelangt; wobei die innere Schicht (2, 12) der Abdeckung (12, 411, 1112) mindestens eines der Folgenden aufweist: (a) Tinte; (b) Farbe; (c) eine Folie; (d) eine dünne Schicht; (e) ein transparentes Material; (f) ein transluzentes Material; (g) ein lichtdurchlässiges Material.

5. Komponente (100, 300, 400) nach einem der Ansprüche 1 bis 4, wobei die Abdeckung (12, 411, 1112) eine Öffnung aufweist, die so gestaltet ist, dass sie mindestens (a) die Dekorschicht (4) freilegt; oder (b) die Dekorschicht (4) sichtbar macht.

6. Komponente (100, 300, 400) nach einem der Ansprüche 1 bis 5, welche ferner einen Klebstoff (3) aufweist, der so konfiguriert ist, dass er die Dekorschicht (4) mit der Abdeckung (12, 411, 1112) verbindet; wobei der Klebstoff (3) so konfiguriert ist, dass er Licht, das von der Abdeckung (12, 411, 1112) auf die Dekorschicht (4) fällt, durchlässt.

7. Komponente (100, 300, 400) nach einem der Ansprüche 1 bis 6, wobei die Oberfläche, die für einen Insassen sichtbar sein soll, einen ersten Bereich, der die Abdeckung (12, 411, 1112) aufweist, und einen zweiten Bereich, der die Dekorschicht (4) aufweist, aufweist; wobei der visuelle Effekt der Dekorschicht (4) und der visuelle Effekt der Abdeckung (12, 411, 1112) so gestaltet sind, dass sie einen zusammengesetzten visuellen Effekt für die Oberfläche, die für den Insassen sichtbar sein soll, erzeugen.

8. Komponente (100, 300, 400) nach einem der Ansprüche 1 bis 7, die ferner eine Abdeckungsanordnung aufweist, die die Abdeckung (12, 411, 1112) und mindestens eines der folgenden Elemente aufweist: (a) eine elektrische Schaltung; (b) einen Sensor; (c) einen kapazitiven Schalter; (d) einen kapazitiven Schaltersensor.

9. Komponente (100, 300, 400) nach einem der Ansprüche 1 bis 8, wobei der visuelle Effekt der Abdeckung (12, 411, 1112) mindestens eines der Folgenden aufweist: (a) transparent; (b) transluzent; (c) undurchsichtig; (d) Farbe; (e) Beschichtung; (f) Farbverlauf; (g) Übergang; (h) Schattierung; (i) Konstruktionsmaterial; (j) Kunststoff; (k) spritzgegossener Kunststoff; (I) Kontur; (m) Oberflächeneffekt; (n) Konturform; (o) nichtplanare Form; (p) Sprenkelung; (q) teilweise transparent; (r) teilweise transluzent; (s) teilweise undurchsichtig.

10. Komponente (100, 300, 400) nach einem der Ansprüche 1 bis 9, wobei der visuelle Effekt der Abdeckung (12, 411, 1112) einen Übergang zwischen zwei visuellen Effekten aufweist.

11. Komponente (100, 300, 400) nach einem der Ansprüche 1 bis 10, wobei der visuelle Effekt der Dekorschicht (4) mindestens eines der Folgenden aufweist: (a) Holzverbundstoff; (b) Metall; (c) Textur; (d) Holz; (e) Holzmaserung; (f) Laminatoberfläche; (g) natürliches Material; (h) echtes Material; (i) Folie; (j) Kontur; (k) gekrümmte Kante; (I) Faser; (m) Stoff; (n) Stein; (o) Mineral.

12. Komponente (100, 300, 400) nach einem der Ansprüche 1 bis 11, wobei die Dekorschicht (4) auf die Basis (6, 16) laminiert ist.

13. Verfahren zur Herstellung einer Fahrzeugverkleidungskomponente (100, 300, 400), das die folgenden Schritte aufweist:
(a) Ausbilden einer Basis (6, 16);
(b) Verbinden einer Dekorschicht (4) mit der Basis (6, 16), um eine dekorative Basis zu schaffen; und
(c) Verbinden einer Abdeckung (12, 411, 1112) mit der Dekorschicht (4);
wobei mindestens ein Bereich der Abdeckung (12, 411, 1112) so konfiguriert ist, dass er den Durchgang von Beleuchtung von der Abdeckung (12, 411, 1112) zu der dekorativen Basis ermöglicht;
wobei die Abdeckung (12, 411, 1112) aus Glas besteht;
wobei die Abdeckung (12, 411, 1112) eine innere Schicht (2, 12) aufweist; wobei die innere Schicht (2, 12) mindestens eines der folgenden Elemente aufweist: (a) eine elektrische Schaltung; (b) einen Sensor; (c) einen kapazitiven Schalter; (d) einen kapazitiven Schaltersensor.

14. Verfahren nach Anspruch 13, wobei die Abdeckung (12, 411, 1112) eine innere Schicht (2, 12) und eine äußere Schicht (1, 11) aufweist;
wobei das Verbinden der Abdeckung (12, 411, 1112) mit der Dekorschicht (4) das Aufbringen eines Klebstoffs (3) auf mindestens eines von (a) der Abdeckung (12, 411, 1112) und (b) der Dekorschicht (4) aufweist; wobei der Klebstoff (3) so konfiguriert ist, dass er den Durchgang von Beleuchtung von der Abdeckung (12, 411, 1112) zu der dekorativen Basis ermöglicht; und/oder
wobei die Abdeckung (12, 411, 1112) eine innere Schicht (2, 12) und eine äußere Schicht (1, 11) aufweist und wobei mindestens ein Bereich der inneren Schicht (2, 12) der Abdeckung (12, 411, 1112) so konfiguriert ist, dass er Licht, das von einer Anzeige zu der äußeren Schicht (1, 11) der Abdeckung (12, 411, 1112) verläuft, durchlässt, wobei das Verfahren vorzugsweise den Schritt des Aufbringens von mindestens einem von (a) Tinte (b) Farbe (c) einer Folie (d) einer dünnen Schicht auf die äußere Schicht (1, 11) aufweist, um die innere Schicht (2, 12) zu erzeugen; und/oder
wobei zumindest ein Bereich der inneren Schicht (2, 12) vorzugsweise so konfiguriert ist, dass er den Durchgang von Licht, das von der äußeren Schicht (1, 11) zu der dekorativen Basis verläuft, verhindert.

15. Verfahren nach Anspruch 13 oder 14, welches den Schritt des Auftragens einer Beschichtung auf mindestens einen Bereich der Abdeckung (12, 411, 1112) aufweist, um einen visuellen Effekt zu erzeugen; und/oder welches den Schritt des Erzeugens einer Öffnung in der Abdeckung (12, 411, 1112) aufweist; wobei die Öffnung so konfiguriert ist, dass sie mindestens eines der Folgenden ermöglicht: (a) Freilegen der dekorativen Basis; (b) Sichtbarmachen der dekorativen Basis; und/oder welches den Schritt des Auftragens von mindestens einem von (a) Tinte (b) Farbe (c) einer Folie (d) einer dünnen Schicht auf eine innere Oberfläche der Abdeckung (12, 411, 1112) aufweist, um eine Abdeckungsanordnung zu erzeugen, die einen transparenten Bereich und einen teilweise undurchsichtigen Bereich aufweist.

## Revendications

1. Composant (100, 300, 400) pour un intérieur de véhicule avec une surface destinée à être visible pour un occupant quand le composant (100, 300, 400) est installé dans l'intérieur de véhicule, comprenant :
(a) une base (6, 16) ;
(b) une couche décorative (4) couplée à la base ; et
(c) une couverture (12, 411, 1112) couplée à la couche décorative (4) comprenant une couverture extérieure (1, 11) et configurée pour fournir un effet visuel ;
dans lequel la couche décorative (4) comprend un matériau naturel configuré pour fournir un effet visuel ;
dans lequel la couverture (12, 411, 1112) comprend une couche intérieure (2, 12) comprenant au moins une portion configurée pour empêcher une visibilité de la couche décorative (4) ;
dans lequel la couverture (12, 411, 1112) comprend du verre ;
dans lequel la couche intérieure (2, 12) de la couverture (12, 411, 1112) comprend au moins un élément parmi : (a) circuit électrique ; (b) capteur ; (c) commutateur capacitif ; (d) capteur à commutateur capacitif.

2. Composant (100, 300, 400) selon la revendication 1, dans lequel la couche décorative (4) comprend au moins un élément parmi : (a) stratifié ; (b) feuille ; (c) ; vernis ; (d) film.

3. Composant (100, 300, 400) selon la revendication 1 ou 2, dans lequel la base (6, 16) comprend une surface non planaire ; dans lequel la couche intérieure (2, 12) de la couverture (12, 411, 1112) et la couche extérieure (1, 11) de la couverture (12, 411, 1112) sont non planaires ; dans lequel la couche intérieure (2, 12) de la couverture (12, 411, 1112) est configurée pour être alignée avec la surface non planaire de la base (6, 16).

4. Composant (100, 300, 400) selon l'une des revendications 1 à 3, dans lequel la couche intérieure (2, 12) de la couverture (12, 411, 1112) est configurée pour empêcher un éclairage de passer depuis un écran (17) jusqu'à la couche extérieure (1, 11) de la couverture (12, 411, 1112) ; dans lequel la couche intérieure (2, 12) de la couverture (12, 411, 1112) comprend au moins un élément parmi : (a) encre ; (b) peinture ; (c) feuille ; (d) film ; (e) matériau transparent ; (f) matériau translucide ; (g) matériau transmetteur de lumière.

5. Composant (100, 300, 400) selon l'une des revendications 1 à 4, dans lequel la couverture (12, 411, 1112) comprend une ouverture configurée pour : soit (a) exposer la couche décorative, soit (b) découvrir la base décorative (4), ou bien les deux.

6. Composant (100, 300, 400) selon l'une des revendications 1 à 5, comprenant en outre un adhésif (3) configuré pour coupler la couche décorative (4) à la couverture (12, 411, 1112) ; dans lequel l'adhésif (3) est configuré pour transmettre de la lumière passant depuis la couverture (12, 411, 1112) jusqu'à la couche décorative (4).

7. Composant (100, 300, 400) selon l'une des revendications 1 à 6, dans lequel la surface destinée à être visible pour un occupant comprend une première portion comprenant la couverture (12, 411, 1112) et une seconde portion comprenant la couche décorative (4) ; dans lequel l'effet visuel de la couche décorative (4) et l'effet visuel de la couverture (12, 411, 1112) sont configurés pour fournir un effet visuel composite pour la surface destinée à être visible pour l'occupant.

8. Composant (100, 300, 400) selon l'une des revendications 1 à 7, comprenant en outre un assemblage formant couverture comprenant la couverture (12, 411, 1112) et au moins un élément parmi : (a) circuit électrique ; (b) capteur ; (c) commutateur capacitif ; (d) capteur à commutateur capacitif.

9. Composant (100, 300, 400) selon l'une des revendications 1 à 8, dans lequel l'effet visuel de la couverture (12, 411, 1112) comprend au moins un élément parmi : (a) transparent ; (b) translucide ; (c) opaque ; (d) peinture ; (e) revêtement ; (f) gradient ; (g) transition ; (h) dégradé ; (i) matériau de construction ; (j) plastique ; (k) plastique moulé ; (I) contour ; (m) effet de surface ; (n) forme de contour ; (o) forme non planaire ; (p) moucheture ; (q) partiellement transparent ; (r) partiellement translucide ; (s) partiellement opaque.

10. Composant (100, 300, 400) selon l'une des revendications 1 à 9, dans lequel l'effet visuel de la couverture (12, 411, 1112) comprend une transition entre deux effets visuels.

11. Composant (100, 300, 400) selon l'une des revendications 1 à 10, dans lequel l'effet visuel de la couche décorative (4) comprend au moins un élément parmi : (a) bois composite ; (b) métal ; (c) texture ; (d) bois ; (e) grain de bois ; (f) surface stratifiée ; (g) matériau naturel ; (h) matériau authentique ; (i) feuille ; (j) contour ; (k) bord incurvé ; (I) fibre ; (m) tissu ; (n) pierre ; (o) minéral.

12. Composant (100, 300, 400) selon l'une des revendications 1 à 11, dans lequel la couche décorative (4) est stratifiée jusqu'à la base (6, 16).

13. Procédé de fabrication d'un composant d'habillage de véhicule (100, 300, 400) comprenant les étapes consistant à :
(a) fournir une base (6, 16) ;
(b) joindre une couche décorative (4) à la base (6, 16) pour créer une base décorative ; et
(c) joindre une couverture (12, 411, 1112) à la couche décorative (4) ;
dans lequel au moins une portion de la couverture (12, 411, 1112) est configurée pour permettre à un éclairage de passer depuis la couverture (12, 411, 1112) jusqu'à la base décorative ;
dans lequel la couverture (12, 411, 1112) comprend du verre ;
dans lequel la couverture (12, 411, 1112) comprend une couche intérieure (2, 12) ;
dans lequel la couche intérieure (2, 12) comprend au moins un élément parmi : (a) circuit électrique ; (b) capteur ; (c) commutateur capacitif ; (d) capteur à commutateur capacitif.

14. Procédé selon la revendication 13, dans lequel la couverture (12, 411, 1112) comprend une couche intérieure (2, 12) et une couche extérieure (1, 11) :
dans lequel l'étape consistant à joindre la couverture (12, 411, 1112) à la couche décorative (4) comprend d'appliquer un adhésif (3) sur au moins un élément parmi : (a) couverture (12, 411, 1112) ; (b) couche décorative (4) ; dans lequel l'adhésif (3) est configuré pour permettre à un éclairage de passer depuis la couverture (12, 411, 1112) jusqu'à la base décorative ; et/ou
dans lequel la couverture (12, 411, 1112) comprend une couche intérieure (2, 12) et une couche extérieure (1, 11) et dans lequel au moins une portion de la couche intérieure (2, 12) de la couverture (12, 411, 1112) est configurée pour transmettre de la lumière passant depuis un écran jusqu'à la couche extérieure (1, 11) de la couverture (12, 411, 1112), dans lequel le procédé comprend de préférence l'étape consistant à appliquer au moins un élément parmi : a) encre ; (b) peinture ; (c) feuille ; (d) film ; sur la couche extérieure (1, 11) pour créer la couche intérieure (2, 12) ; et/ou dans lequel au moins une portion de la couche intérieure (2, 12) est de préférence configurée pour empêcher une transmission de lumière passant depuis la couche extérieure (1, 11) jusqu'à la base décorative.

15. Procédé selon la revendication 13 ou 14, comprenant l'étape consistant à appliquer un revêtement sur au moins une portion de la couverture (12, 411, 1112) pour créer un effet visuel ; et/ou
comprenant l'étape consistant à créer une ouverture dans la couverture (12, 411, 1112) ;
dans lequel l'ouverture est configurée pour : soit (a) exposer la couche décorative, soit (b) découvrir la base décorative (4), ou bien les deux ; et/ou
comprenant l'étape consistant à appliquer au moins un élément parmi : (a) encre ; (b) peinture ; (c) feuille ; (d) film ; sur une surface de la couverture (12, 411, 1112) pour créer un assemblage formant couverture comprenant une portion transparente et une portion partiellement opaque.
